Europäisches Patentamt

European Patent Office

Office européen des brevets

(19)

(11) Veröffentlichungsnummer: **0 142 722 B1**

# EUROPÄISCHE PATENTSCHRIFT

(45) Veröffentlichungstag der Patentschrift: **31.07.91**

(21) Anmeldenummer: **84112641.0**

(22) Anmeldetag: **19.10.84**

(51) Int. Cl.⁵: **B01D 53/36**, B01J 35/08, B01J 37/08

(54) **Katalysatorkörper für Abgaskatalysatoren für Verbrennungskraftmaschinen und Verfahren zu dessen Herstellung.**

(30) Priorität: **19.11.83 DE 3341804**

(43) Veröffentlichungstag der Anmeldung:
**29.05.85 Patentblatt 85/22**

(45) Bekanntmachung des Hinweises auf die
Patenterteilung:
**31.07.91 Patentblatt 91/31**

(84) Benannte Vertragsstaaten:
**AT BE CH DE FR GB IT LI LU NL SE**

(56) Entgegenhaltungen:
**EP-A- 0 174 716**
**BE-A- 519 742**
**GB-A- 1 465 206**
**US-A- 3 355 258**
**US-A- 4 106 913**

(73) Patentinhaber: **Seitz, Wilfried**
**Rüdesheimer Strasse 94**
**W-6238 Hofheim-Wallau(DE)**

(72) Erfinder: **Seitz, Wilfried**
**Rüdesheimer Strasse 94**
**W-6238 Hofheim-Wallau(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

**Beschreibung**

Die Erfindung betrifft einen Katalysatorkörper für Abgaskatalysatoren für Verbrennungsmaschinen sowie ein Verfahren zu dessen Herstellung.

Zur Reduzierung der Umweltverschmutzung ist vorgesehen, in zunehmendem Maße in Kraftfahrzeugen Katalysatoren für die Abgase der Verbrennungskraftmaschinen einzusetzen, mit deren Hilfe Schadstoffe in den Abgasen in unschädliche Verbindungen umgewandelt werden.

Als eigentliche Katalysatoren werden hier Schwermetalle eingesetzt, die als Beschichtung oder in ähnlicher Weise auf einen möglichst inerten Trägerkörper aufgebracht werden. Als solche Trägerkörper für die Katalysatoren für Autoabgasentgiftung sind spezielle Monolithe oder Wabenkörper entwickelt worden, die in der Anströmrichtung durchgehende Kanäle aufweisen, durch die das Abgas unter Berührung einer möglichst großen Oberfläche hindurchgeleitet wird, um mit dem eigentlichen Katalysator in Berührung zu gelangen. So beschreibt die US-A-4,106,913 einen Katalysatorkörper für Verbrennungskraftmaschinen, der aus einer Packung aus Kugeln oder kugelähnlichen Körpern eines keramischen Materials besteht, wobei die Kugeln durch Erwärmen bis in den Erweichungsbereich des Materials miteinander verbunden sind. Die GB-A-1,465,206 beschreibt einen mit einem die Oberflächenporosität erhöhenden Stoff beschichteten strömungsdurchlässigen Katalysatorkörper. Diese bisher bekannten Katalysatorkörper sind in ihrer Herstellung verhältnismäßig teuer.

Der vorliegenden Erfindung liegt daher die Aufgabe zugrunde einen Katalysatorkörper vorzuschlagen der in seiner Herstellung kostengünstiger wird.

Diese Aufgabe wird erfindungsgemäß durch einen Katalysatorkörper gelöst, der aus einer Packung aus Kugeln oder kugelähnlichen Körpern eines keramischen Materials besteht, die an ihren Berührungsstellen durch Erwärmen bis in den Erweichungsbereich des Materials miteinander verbunden worden sind. Diese Katalysatorkörper werden hergestellt, indem durch Abschrecken einer Schmelze eines mineralischen Materials in einem flüssigen Kühlmittel auf an sich bekannte Weise Kugeln oder kugelähnliche Körper aus dem mineralischen Material erzeugt, die Kugeln in eine dem herzustellenden Kondensatorkörper entsprechende Packungsanordnung gebracht und diese Anordnung bis in den Erweichungsbereich des Materials erwärmt wird, um die Kugeln oder kugelähnlichen Körper an ihren Berührungsstellen miteinander zu verbinden.

Als eines der bevorzugten mineralischen Materialien wird ein Basalt vorgeschlagen. Da bestimmte Materialien für das Aufbringen des eigentlichen metallischen Katalysators unter Umständen keine ausreichende Oberflächenporosität aufweisen, kann der Katalysatorkörper in solchen Fällen vor dem Einbringen des Katalysators noch mit einer die Oberflächenporosität erhöhenden Beschichtung versehen werden. Hierfür ist beispielsweise eine Beschichtung mit aktiver Tonerde geeignet.

Weitere zweckmäßige Ausgestaltungen der Erfindung sind in den Unteransprüchen beansprucht.

Um einerseits eine ausreichende Kontaktoberfläche für das Abgas mit dem Katalysator zu erreichen, andererseits den Strömungswiderstand des Körpers aber in vertretbaren Grenzen zu halten, müssen geeignete Kugeldurchmesser für den jeweiligen Anwendungsfall ermittelt werden. Dabei ist es grundsätzlich möglich, den Katalysatorkörper aus Kugeln unterschiedlichen Durchmessers aufzubauen, in anderen Fällen kann es aber zweckmäßiger sein, Kugeln eines etwa gleichen Durchmesserbereiches zu verwenden, die dann nach Herstellen der Kugeln durch Klassifizieren aussortiert werden können.

Wichtig ist eine ausreichende Temperaturbeständigkeit des verwendeten Materials, da die Abgaskatalysatoren mit verhältnismäßig hohen Verbrennungsgastemperaturen betrieben werden müssen und deshalb kurz hinter dem Austritt aus dem Motorblock in das Abgasrohreingebaut werden. Temperaturbeständigkeiten des Materials bis zu 1600°C sind hierbei erwünscht, unter Umständen ist es aber auch möglich, mit etwas geringeren Temperaturbeständigkeiten auszukommen.

**Patentansprüche**

1. Katalysatorkörper für Abgaskatalysatoren für Verbrennungskraftmaschinen, bestehend aus einer Packung aus Kugeln oder kugelähnlichen Körpern, die an ihren Berührungsstellen durch Erwärmen bis in den Erweichungsbereich des Materials miteinander verbunden worden sin, dadurch gekennzeichnet, daß die Kugeln oder kugelähnlichen Körper aus Basalt bestehen.

2. Katalysatorkörper nach Anspruch 1, dadurch gekennzeichnet, daß die Kugeln Durchmesser bis zu 5mm aufweisen.

3. Katalysatorkörper nach Anspruch 1 oder 2, dadurch gekennzeichnet, daß seine Oberflächen mit einer die Oberflächenporosität erhöhenden Schicht beschichtet sind.

4. Katalysatorkörper nach Anspruch 3, dadurch gekennzeichnet, daß diese Schicht aus aktiver Tonerde besteht.

5. Verfahren zum Herstellen eines strömungsdurchlässigen Katalysatorkörpers für Abgaskatalysatoren für Verbrennungskraftmaschinen, bestehend aus Kugeln aus einem mineralischen Material, wobei die Kugeln in eine dem herzustellenden Katalysatorträger entsprechende Packungsanordnung gebracht werden und diese Anordnung bis in den Erweichungsbereich des Materials erwärmt wird, um die Kugeln oder kugelähnlichen Körper an ihren Berührungsstellen miteinander zu verbinden, dadurch gekennzeichnet, daß als mineralisches Material Basalt verwendet wird.

6. Verfahren nach Anspruch 5, dadurch gekennzeichnet, daß die Kugeln oder kugelähnlichen Körper nach ihrer Herstellung in gewisse Durchmesserbereiche klassifiziert werden.

## Claims

1. Cores of catalytic converters for combustion engines, consisting of a pack of pellets or pellet-like bodies, which have been bonded together in their contact regions by heating up to the point at which the material starts to soften, characterized by the fact that the pellets or pellet-like bodies consist of basalt.

2. Cores of catalytic converters in accordance with claim 1, characterized by the fact that the pellets have a diameter of up to 5mm.

3. Cores of catalytic converters in accordance with claim 1 or 2, characterized by the fact that their surface is coated with a layer of material enhancing the surface porosity.

4. Cores of catalytic converters in accordance with claim 3, characterized by the fact that this layer consists of active alumina.

5. Process for the manufacture of a core of catalytic converters for combustion engines, being permeable to flow, consisting of pellets of a mineral material, whereby the pellets are brought into a packing arrangement suitable for the catalyst substrate to be manufactured, the pellets or pellet-like bodies then being heated in this arrangement until the material starts to soften, in order to bond them together in their contact regions, this process being characterized by the fact that basalt is used as the mineral material.

6. Process in accordance with claim 5, characterized by the fact that the pellets or pellet-like bodies are classified according to different diameter ranges after their manufacture.

## Revendications

1. Corps pour catalyseurs de gaz d'echappement de moteurs à combustion, constitué d'un empilage de billes ou de corps analogues à des billes, qui ont été mutuellement reliés à leurs emplacements de contact par chauffage jusque dans la zone de ramollissement de la matière, caractérisé en ce que les billes ou les corps analogues à des billes sont constitués de basalte.

2. Corps pour catalyseurs suivant la revendication 1, caractérisé en ce que les billes présentent un diamètre allant jusque 5mm.

3. Corps pour catalyseurs suivant l'une des revendications 1 et 2, caractérisé en ce que ses surfaces sont enduites d'une couche augmentant la porosité de surface.

4. Corps pour catalyseurs suivant la revendication 3, caractérisé en ce que cette couche est constituée d'alumine active.

5. Procédé de préparation d'un corps de catalyseur perméable à l'écoulement pour des catalyseurs de gaz d'échappement de moteurs à combustion, constitué de billes en une matière minérale, dans lequel les billes sont amenées dans un agencement d'empilage correspondant au support de catalyseur à réaliser et dans lequel cet agencement est chauffé jusque dans la zone de ramollissement de la matière, pour relier mutuellement les billes ou les corps analogues à des billes à leurs emplacements de contact, caractérisé en ce qu'on utilise du basalte comme matière minérale.

6. Procédé suivant la revendication 5, caractérisé en ce que les billes ou les corps analogues à des billes sont, après leur fabrication, classifiés dans certaines gammes de diamètres.